# EUROPEAN PATENT APPLICATION

(11) **EP 1 884 707 A2**
(43) Date of publication of application: **06.02.2008**
(21) Application number: 07112813.6
(22) Date of filing: 20.07.2007
(51) Int. Cl.: F21S 8/02, F21V 31/04, F21V 15/01, F21Y 101/02

(54) **Flush-mounted watertight lighting device**

(30) Priority: 28.07.2006 IT FI20060047 U
(71) Applicant: TARGETTI SANKEY S.p.A., 50145 Firenze (IT)
(72) Inventor: Targetti, Giampaolo, 50100 Firenze (IT)
(74) Representative: Bardini, Marco Luigi

(57) **Abstract**

A watertight device appliance for flush mounting, comprising a box-shaped body (1) with an opening (1a) on one side closed by a panel (8) of material transparent to the light, with a light source (3) provided in the body (1) and connectable to an electric power supply. The panel (8) is coated with a layer of resin (9) suitable for ensuring a watertight connection between the panel and the box-shaped body (1).

## Description

The present invention relates generally to the lighting devices and in particular to a watertight lighting device for flush mounting.

A well-known method used in the realization of flush-mounted watertight lighting devices involves embedding the light source, generally LEDs, in a resin, e.g. silicone resin, or incorporating it between two transparent plates welded together. A solution of this type may be advantageously used in the case of small lighting devices, but becomes excessively expensive for larger devices.

The watertightness of devices with a replaceable light source relies on sealing gaskets generally placed between the container delimiting the chamber where the light source is installed and the transparent panel used to close the opening of said container. Therefore, the reliability of the seal very often depends on the proper assembly and closure of the light source container by the operator, who must tighten the screws adequately and set the gaskets appropriately.

The object of the present invention is to provide a lighting device for flush mounting whose watertightness complies with the most demanding requirements of current standards and that does not depend on the ability of the operator responsible for installing the lighting device.

Another object of the present invention is to provide a lighting device of the above-mentioned type in which the excellent level of watertightness is obtained at a relatively low cost.

These objects are achieved by a watertight lighting device for flush mounting according to the present invention, which comprises a box-shaped container with an opening on one side that is closed with a panel that is transparent to the light and a light source installed inside the container and connectable to an electric power supply. The panel is coated with a layer of resin suitable for ensuring a watertightness seal between the panel and the box-shaped container.

The invention will be illustrated more accurately, in the following description of an embodiment, that is given as a non-limiting example with reference to the appended drawings, wherein:

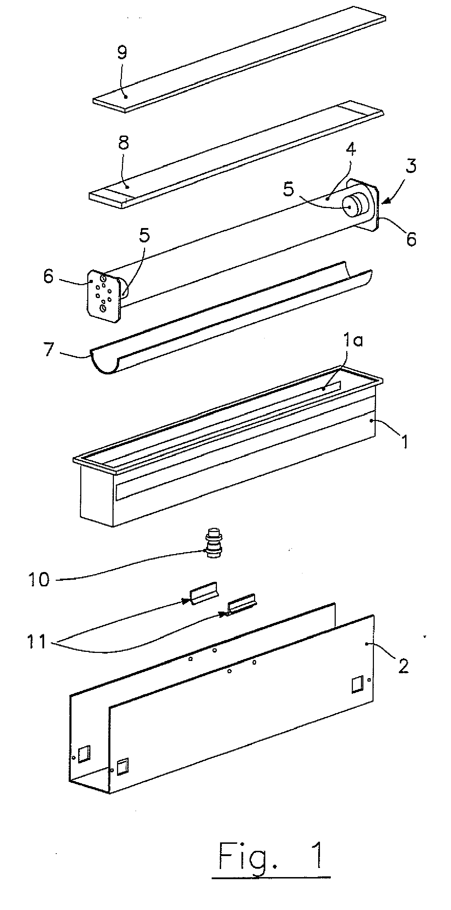

- figure 1 is an exploded perspective view of the lighting device according to the present invention;

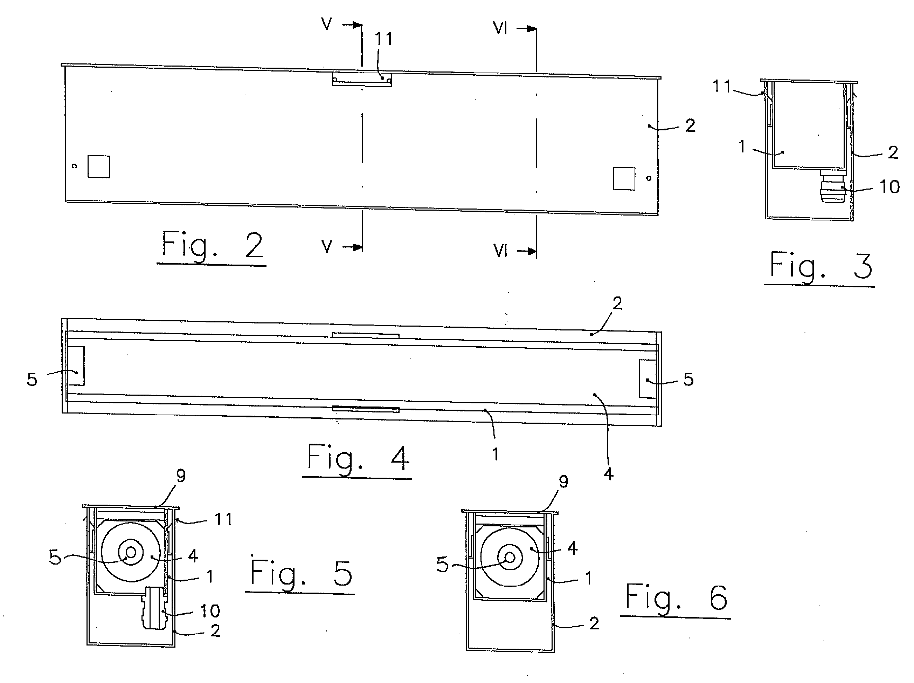

- figure 2 is a side view of the device of figure 1;
- figure 3 is a view of one end of the device of figure 2;
- figure 4 is a top plan view of the device of figure 2;
- figures 5 and 6 are cross-sectional views of the lighting device according to the invention respectively along lines V-V and VI-VI in figure 2.

With reference to the above figures, the numeral 1 is used to indicate a box-shaped body with welded sides and an opening 1a coinciding with one of its sides and the numeral 2 is used to indicate a housing for containing the body 1 with a snap fastener connection and designed to be embedded in the structure where the lighting device is to be installed (e.g. in a wall or in the ground).

The body 1 is shaped so that it can house a light source 3 consisting of a bar 4, preferably cylindrical in shape, made of transparent material with LEDs 5 arranged to each end of said bar 4. These LEDs are installed on supporting plates 6. The bar 4 may advantageously be made of methacrylate.

The bar 4 rests on a reflecting screen 7 set on the bottom of the body 1, which surrounds a portion of the lateral surface of the bar 4.

The opening 1a of the body 1 is covered with a transparent panel 8, e.g. made of glass, on which a layer of resin 9 is laid on, which fills the gaps between the panel and the edge of the opening 1a of the body 1 and ensures the required watertightness of the assembly, and, at the same time, increases the shock resistance of the panel 8. In particular, to allow an even distribution over the panel surface, and a penetration into any gaps before solidification, the layer of resin is laid down in a fluid state on the panel 8. A type of resin that can be advantageously used, for instance, is a dual-component epoxy resin such as Araldite 2020.

The light source may also consist of a row of LEDs embedded in the bar 4. A light source with LEDs is preferable to other, potentially suitable types of light source, such as neon tubes, because the device according to the present invention is intended for single use and LEDs guarantee a working life (more than 100,000 hours) far higher than other types of light source. The scope of the invention is nonetheless not restricted to the use of a LED light source.

As mentioned previously, beside ensuring a watertight seal for the lighting device, the layer of resin 9 also increases its shock resistance, thereby expanding the range of applications for this type of lighting device to conditions and uses in which the absence of any risk of breakage of fragile device components is a fundamental condition for its usability.

The device according to the invention is completed with an electric connector 10, for connecting the light source to electric power supply means, coupled to the bottom of the body 1 and embedded in a resin well (not shown) to ensure the necessary seal, and with tamperproof clips 11 for inserting between the body 1 and the housing 2 to prevent any unauthorized removal of the device from the housing 2.

Various modifications can be made to the flush-mounted watertight lighting device of the invention without departing from the scope of the invention as set forth in the appended claims.

## Claims

1. A watertight lighting device for flush mounting comprising a box-shaped body (1) with an opening (1a) on one side closed by a panel (8) made of a material transparent to the light, with a light source (3) provided in said body (1) and connectable to an electric power supply, **characterized in that** said panel (8) is coated with a layer of resin (9) ensuring a watertight seal between the panel (8) and the box-shaped body (1).

2. A lighting device according to claim 1, wherein said light source (3) is a LED light source and comprises a bar (4) of transparent plastic material and at least one pair of LEDs (5) placed at the ends of said bar (4).

3. A lighting device according to claim 1, wherein the LED light source (3) comprises a plurality of LEDs embedded in a bar (4) of transparent plastic material.

4. A lighting device according to any of the previous claims, wherein said bar (4) is cylindrical.

5. A lighting device according to any of the previous claims, wherein a reflecting screen (7) is provided in said body (1), underneath said bar (4).

6. A lighting device according to any of the previous claims, wherein said box-shaped body (1) is arranged with a snap fastener connection in a housing (2) embedded in the structure in which the lighting device is to be installed.
